# FASCICULE DE BREVET EUROPEEN

(11) **EP 0 576 309 B1**
(45) Date de publication et mention de la délivrance du brevet: **27.03.1996**
(21) Numéro de dépôt: 93401233.7
(22) Date de dépôt: 13.05.1993
(51) Int. Cl.: G01B 7/28, G01B 5/20

(54) **Dispositif de contrôle du profil longitudinal d'un cylindre**
Vorrichtung zur Prüfung des Längsprofils eines Zylinders
Device for controlling the longitudinal profile of a cylinder

(30) Priorité: 15.06.1992 FR 9207201
(43) Date de publication de la demande: 29.12.1993
(73) Titulaire: SOLLAC, F-92800 Puteaux (FR)
(72) Inventeur: Dardinier, Jean-Paul, F-59492 Hoymille (FR)
(74) Mandataire: Polus, Camille

(56) Documents cités:
- WO-A-91/09270
- BE-A- 880 896
- DE-A- 2 307 824
- FR-A- 2 076 825

## Description

L'invention est relative à un dispositif de contrôle du profil longitudinal d'un cylindre, notamment d'un cylindre de laminoir.

Les cylindres de laminoir sont usinés de façon à ce que leur diamètre varie légèrement entre les extrémités et le milieu de la table du cylindre. Les variations du diamètre le long de la table constituent le profil longitudinal d'usinage du cylindre qui peut être, par exemple, parabolique. Ce profil doit être contrôlé car il influe sur la qualité du laminage.

Pour contrôler le profil d'usinage, on utilise un dispositif appelé habituellement profilomètre comme par exemple décrit dans WO-A-9 109 270 ou FR-A-2 076 825, comprenant un chariot qui roule sur le cylindre et qui comporte un arceau muni d'un patin et d'un comparateur mécaniques frottant sur des génératrices du cylindre. Lorsque le chariot se déplace longitudinalement sur le cylindre, le comparateur donne des indications sur les variations du diamètre du cylindre et par conséquent sur le profil du cylindre.

Mais cette technique présente plusieurs inconvénients. En particulier, le résultat du contrôle n'est pas enregistré, un réglage par une ligne de référence est nécessaire et on ne peut contrôler que des cylindres dont la surface est exempte de défauts.

Le but de la présente invention est de remédier à ces inconvénients en proposant un dispositif de contrôle du profil d'un cylindre qui permette d'enregistrer automatiquement les mesures en vue de leur traitement, qui ne nécessite pas de réglage par rapport à une ligne de référence et qui permette de contrôler des cylindres dont la surface est endommagée par usure ou est gravée ou grenaillée ou sablée etc...

A cet effet, l'invention a pour objet un dispositif de contrôle du profil longitudinal d'un cylindre, notamment d'un cylindre de laminoir, du type comprenant un chariot déplaçable sur la surface du cylindre, muni d'un arceau en contact par l'intermédiaire de ses bras avec la surface du cylindre, caractérisé en ce que l'arceau est monté sur un support porté par le chariot de façon à être déplaçable suivant un axe transversal par rapport à la direction longitudinale du chariot, le dispositif comportant en outre des moyens de mesure des déplacements de l'arceau par rapport au support, et des moyens de mesure des déplacements du chariot sur la surface du cylindre.

Suivant d'autres caractéristiques de l'invention:
- le support est monté sur le chariot de façon à pivoter autour d'un axe longitudinal du chariot;
- les moyens de mesure des déplacements de l'arceau par rapport à son support comprennent un détecteur de déplacements électromagnétique porté par le support ;
- les moyens de mesure des déplacements du chariot sur la surface du cylindre comprennent un compteur des tours effectués par une roulette supplémentaire ajoutée sous le chariot maintenue en contact de la surface du cylindre par une lame ressort ;
- le dispositif comprend des moyens électroniques et informatiques de traitement des mesures délivrées par les moyens de mesure des déplacements de l'arceau par rapport au support et par les moyens de mesure des déplacements du chariot sur la surface du cylindre ;
- les moyens électroniques et informatiques sont embarqués sur le chariot ;
- les axes de rotation des roulettes situées de part et d'autre du chariot font entre eux un angle de 120° environ ;
- les bras de l'arceau font entre eux un angle de 60° environ ;
- les bras de l'arceau comportent chacun un rouleau destiné à rouler au contact d'une génératrice du cylindre.

L'invention va maintenant être décrite en regard de l'unique figure annexée qui est une vue en perspective du chariot d'un dispositif selon l'invention pour le contrôle du profil longitudinal d'un cylindre de laminoir.

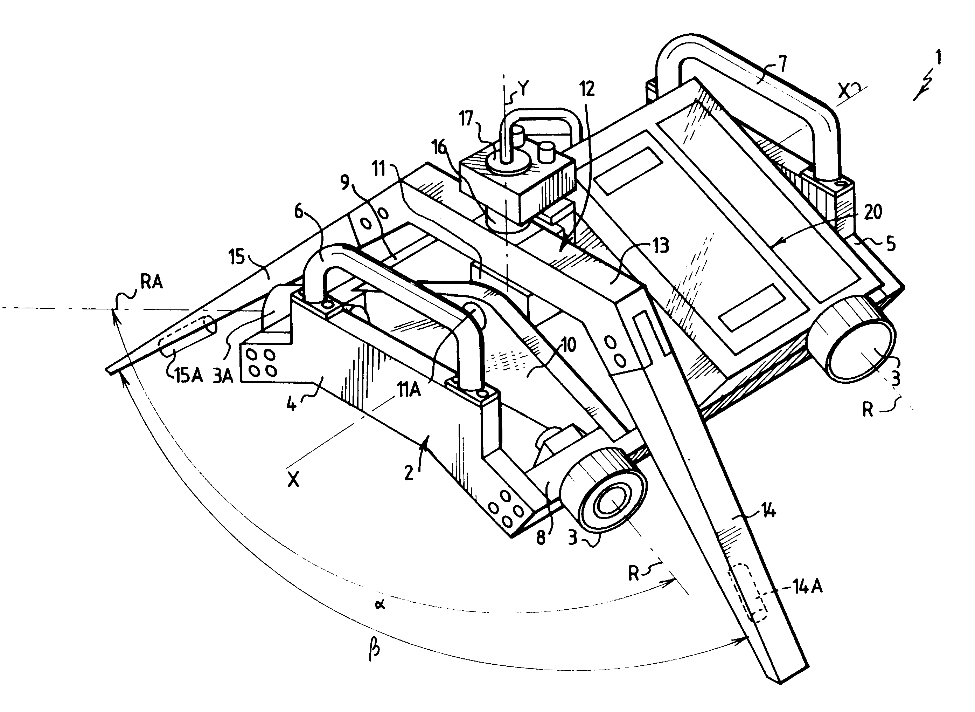

On voit sur la figure 1 que le dispositif de contrôle du profil d'un cylindre de laminoir comporte un chariot repéré généralement par 1. Ce chariot 1 est destiné à rouler sur la surface du cylindre, non représenté sur la figure, dans le sens longitudinal de ce dernier.

Le chariot 1 comprend un cadre 2 portant quatre roulettes 3,3A.

Le cadre 2 comporte deux traverses d'extrémité 4,5 munies de poignées 6,7 et deux longerons latéraux 8,9, de section carrée, sur lesquels sont montées rotatives les roulettes 3,3A. Les roulettes sont montées sur des roulements de précision non représentés.

Les faces des longerons 8,9 portant les roulettes 3,3A, sont inclinées par rapport au plan défini par la base du chariot de telle façon que les axes de rotation R des roulettes 3 situées sur un longeron 8 fassent un angle α de 120° avec les axes de rotation RA des roulettes 3A situées sur l'autre longeron 9. Cet angle α est mesuré dans un plan perpendiculaire à la direction longitudinale X du chariot 1.

Le chariot 1 comporte également une traverse 10, fixée au cadre 2, sur laquelle est monté un support 11 pivotant autour d'un axe longitudinal du chariot matérialisé par un pivot 11A. Dans le support 11 est monté déplaçable perpendiculairement à l'axe de pivotement 11A et à peu près perpendiculairement au plan de la base du chariot, un arceau 12 comprenant une traverse 13 et deux bras 14,15 faisant entre eux un angle β de 60°.

Les extrémités des bras 14,15 comportent chacune un rouleau 14A,15A destiné à rouler au contact d'une génératrice du cylindre de laminoir. Les rouleaux 14A,15A sont disposés en dessous du plan de la base du chariot, en considérant la figure.

La traverse 13 comporte des pions 16 (un seul visible à la figure) d'axe Y perpendiculaire à l'axe de pivotement 11A du support 11. Ces pions 16 coulissent dans des alésages de forme complémentaire, non représentés sur la figure, ménagés dans le support 11.

A sa partie supérieure, le support 11 porte un détecteur 17 électromagnétique de déplacements, de type connu, qui détecte et mesure les déplacements suivant l'axe Y du pion supérieur 16 et donc les déplacements de l'arceau 12 par rapport au support 11.

Le chariot 1 comporte un codeur de rotation, de type connu, monté sur l'arbre de rotation d'une roulette supplémentaire ajoutée sous le chariot maintenue en contact de la surface du cylindre par une lame ressort, permettant de compter le nombre de tours de roulette effectués lors d'un déplacement du chariot sur la surface du cylindre. La roulette supplémentaire, placée sous le chariot, est fixée à une lame ressort qui la maintient en contact avec le cylindre.

Le détecteur 17 de déplacement et le codeur de rotations sont reliés à des moyens 20 électroniques et informatiques, de type connu, qui permettent d'enregistrer les mesures, faire les calculs nécessaires et restituer sous forme graphique les résultats. Les moyens 20 sont embarqués sur le chariot 1.

Pour contrôler un cylindre tel qu'un cylindre de laminoir, on pose le chariot 1 au dessus de la génératrice supérieure du cylindre, celui-ci étant à peu près à l'horizontale. Les roulettes 3,3A et les rouleaux 14A,15A reposent alors sur la surface du cylindre et la position de l'arceau 12 par rapport au support 11 est fonction du diamètre du cylindre. On déplace ensuite le chariot le long de la génératrice supérieure du cylindre, ce qui fait tourner les roulettes 3,3A. On relève et enregistre le nombre de rotations de la roulette supplémentaire à l'aide du codeur et des moyens 20 électroniques et informatiques, ce qui permet d'obtenir le déplacement longitudinal du chariot.

A chaque instant, la position de l'arceau 12 par rapport au support 11 est fonction du diamètre local du cylindre. A l'aide du détecteur 17 et des moyens 20 électroniques et informatiques on enregistre la position de l'arceau 12 par rapport au support 11 ce qui permet de calculer les différences de diamètre du cylindre.

Les moyens 20 électroniques et informatiques disposent ainsi, à chaque instant, de la position du chariot sur la génératrice du cylindre et du diamètre local du cylindre. Ces valeurs permettent de tracer un profil longitudinal du cylindre.

Au cours du déplacement du chariot, le support 11 d'arceau monté pivotant sur la traverse 10 du chariot permet d'assurer un bon contact des rouleaux 14A,15A sur la surface du cylindre.

Cependant, en variante, il est possible de fixer le support 11 d'arceau solidairement au chariot.

Les rouleaux 14A,15A peuvent être supprimés ou remplacés par d'autres organes assurant le contact des extrémités des branches de l'arceau sur le cylindre.

On notera qu'on peut utiliser des capteurs équivalents de ceux qui sont décrits et que les moyens électroniques et informatiques peuvent être soit embarqués sur le chariot, soit à côté.

Enfin la roulette servant à mesurer les déplacements longitudinaux peut être une roulette de support 3,3A.

## Revendications

1. Dispositif de contrôle du profil longitudinal d'un cylindre, notamment d'un cylindre de laminoir, du type comprenant un chariot (1) déplaçable sur la surface du cylindre, muni d'un arceau (12) en contact par l'intermédiaire de ses bras (14,15) avec la surface du cylindre, caractérisé en ce que l'arceau (12) est monté sur un support (11) porté par le chariot (1) de façon à être déplaçable suivant un axe (Y) transversal par rapport à la direction longitudinale (X) du chariot (1), le dispositif comportant en outre des moyens (17) de mesure des déplacements de l'arceau (12) par rapport au support (11), et des moyens de mesure des déplacements du chariot (1) sur la surface du cylindre.

2. Dispositif selon la revendication 1, caractérisé en ce que le support (11) est monté sur le chariot (1) de façon à pivoter autour d'un axe longitudinal (11A) du chariot.

3. Dispositif selon la revendication 1 ou 2, caractérisé en ce que les moyens de mesure des déplacements de l'arceau (12) par rapport à son support (11) comprennent un détecteur de déplacements électromagnétique (17) porté par le support (11).

4. Dispositif selon l'une quelconque des revendications 1 à 3, caractérisé en ce que les moyens de mesure des déplacements du chariot (1) sur la surface du cylindre comprennent un compteur des tours effectués par une roulette supplémentaire placée sous le chariot (1).

5. Dispositif selon l'une quelconque des revendications 1 à 4, caractérisé en ce qu'il comprend des moyens (20) électroniques et informatiques de traitement des mesures délivrées par les moyens (17) de mesure des déplacements de l'arceau par rapport au support (11) et par les moyens de mesure des déplacements du chariot (1) sur la surface du cylindre.

6. Dispositif selon la revendication 5, caractérisé en ce que les moyens (20) électroniques et informatiques sont embarqués sur le chariot.

7. Dispositif selon l'une quelconque des revendications 1 à 6, caractérisé en ce que les axes de rotation (R,RA) des roulettes (3,3A) situées de part et d'autre du chariot (1) font entre eux un angle (α) de 120° environ.

8. Dispositif selon l'une quelconque des revendications 1 à 7, caractérisé en ce que les bras (14,15) de l'arceau (12) font entre eux un angle (β) de 60° environ.

9. Dispositif selon l'une quelconque des revendications 1 à 8, caractérisé en ce que les bras (14,15) de l'arceau (12) comportent chacun un rouleau (14A,15A) destiné à rouler au contact d'une génératrice du cylindre.

## Patentansprüche

1. Vorrichtung zur Prüfung des Längsprofils eines Zylinders, insbesondere eines Walzzylinders, der Bauart mit einem Schlitten (1), der auf der Oberfläche des Zylinders verschiebbar und mit einem Bügel (11) versehen ist, der über seine Arme (14, 15) mit der Oberfläche des Zylinders in Kontakt ist, dadurch gekennzeichnet, daß der Bügel (12) an einem vom Schlitten (1) getragenen Träger (11) in der Weise angebracht ist, daß er längs einer Achse (Y), die quer zur Längsachse (X) des Schlittens (1) verläuft, verschiebbar ist, wobei die Vorrichtung außerdem Mittel (17) zum Messen der Verschiebungen des Bügels (12) in bezug auf den Träger (11) sowie Mittel zum Messen der Verschiebungen des Schlittens (1) auf der Oberfläche des Zylinders enthält.

2. Vorrichtung nach Anspruch 1, dadurch gekennzeichnet, daß der Träger (11) auf dem Schlitten (1) in der Weise angebracht ist, daß er um eine Längsachse (11A) des Schlittens schwenkbar ist.

3. Vorrichtung nach Anspruch 1 oder 2, dadurch gekennzeichnet, daß die Mittel zum Messen der Verschiebungen des Bügels (12) in bezug auf seinen Träger (11) einen von dem Träger (11) getragenen elektromagnetischen Verschiebungsdetektor (17) enthalten.

4. Vorrichtung nach irgendeinem der Ansprüche 1 bis 3, dadurch gekennzeichnet, daß die Mittel zum Messen der Verschiebungen des Schlittens (1) auf der Oberfläche des Zylinders einen Zähler der Umdrehungen enthalten, die von einem auf dem Schlitten (1) angeordneten zusätzlichen Röllchen ausgeführt werden.

5. Vorrichtung nach irgendeinem der Ansprüche 1 bis 4, dadurch gekennzeichnet, daß sie elektronische und informationstechnische Mittel (20) für die Bearbeitung der von den Mitteln (17) zum Messen der Verschiebungen des Bügels in bezug auf den Träger (11) und von den Mitteln zum Messen der Verschiebungen des Schlittens (1) auf der Oberfläche des Zylinders gelieferten Meßwerte enthält.

6. Vorrichtung nach Anspruch 5, dadurch gekennzeichnet, daß die elektronischen und informationstechnischen Mittel (20) auf dem Schlitten untergebracht sind.

7. Vorrichtung nach irgendeinem der Ansprüche 1 bis 6, dadurch gekennzeichnet, daß die Drehachsen (R, RA) der Röllchen (3, 3A), die sich beiderseits des Schlittens (1) befinden, einen Winkel (α) von ungefähr 120° einschließen.

8. Vorrichtung nach irgendeinem der Ansprüche 1 bis 7, dadurch gekennzeichnet, daß die Arme (14, 15) des Schlittens (12) einen Winkel (β) von ungefähr 60° bilden.

9. Vorrichtung nach irgendeinem der Ansprüche 1 bis 8, dadurch gekennzeichnet, daß die Arme (14, 15) des Bügels (12) jeweils eine Rolle (14A, 15A) enthalten, die dazu bestimmt sind, in Kontakt mit einer Erzeugenden des Zylinders zu rollen.

## Claims

1. Apparatus for monitoring the longitudinal profile of a cylinder, notably a cylinder in a rolling mill, of the type comprising a carriage (1) which is movable over the surface of the cylinder, provided with an arch (12) which is in contact, via its arms (14, 15), with the surface of the cylinder, characterised in that the arch (12) is mounted on a support (11) carried by the carriage (1) so as to be movable along a transverse axis (Y) relative to the longitudinal direction (X) of the carriage (1), the apparatus further comprising means (17) for measuring the movements of the arch (12) relative to the support (11), and means for measuring the movements of the carriage (1) over the surface of the cylinder.

2. Apparatus according to claim 1, characterised in that the support (11) is mounted on the carriage (1) so as to pivot about a longitudinal axis (11A) of the carriage.

3. Apparatus according to claim 1 or 2, characterised in that the means for measuring the displacements of the arch (12) relative to its support comprise an electromagnetic displacement detector (17) carried by the support (11).

4. Apparatus according to any one of claims 1 to 3, characterised in that the means for measuring the movements of the carriage (1) over the surface of the cylinder comprise a counter for counting the revolutions made by an additional roller placed under the carriage (1).

5. Apparatus according to any one of claims 1 to 4, characterised in that it comprises electronic data processing means (20) for processing the measurements supplied by the means (17) for measuring the movements of the arch relative to the support (11) and by the means for measuring the movements of the carriage (1) over the surface of the cylinder.

6. Apparatus according to claim 5, characterised in that the electronic data processing means (20) are loaded on the carriage.

7. Apparatus according to any one of claims 1 to 6, characterised in that the rotation axes (R, RA) of the rollers (3, 3A) located on each side of the carriage (1) form an angle (α) of about 120° between them.

8. Apparatus according to any one of claims 1 to 7, characterised in that the arms (14, 15) of the arch (12) form an angle (β) of about 60° between them.

9. Apparatus according to any one of claims 1 to 8, characterised in that the arms (14, 15) of the arch (12) each comprise a roller (14A, 15A) intended to roll along in contact with a generatrix of the cylinder.
